# EUROPEAN PATENT APPLICATION

(11) **EP 0 863 356 A2**
(43) Date of publication of application: **09.09.1998**
(21) Application number: 98500038.9
(22) Date of filing: 10.02.1998
(51) Int. Cl.: F16L 37/092

(54) **Improved coupling head for connecting pipes**

(30) Priority: 14.02.1997 ES 9700395 U
(71) Applicant: Hidroten, S.A., 03113 Alicante (ES)
(72) Inventor: Ten, Juan Manuel, 03016 Alicante (ES)

(57) **Abstract**

This invention basically consists of a head (1) for making pressure connections with the end of a length of pipe. The configuration of the improved coupling head (1) described herein will thus enable different types of connecting elements to be produced, such as linear connections, elbow joints, T-branches, connections with fixed elements, etc.

## Description

This invention, an IMPROVED COUPLING HEAD FOR CONNECTING PIPES, basically consists of a head for making pressure connections with the end of a length of pipe. This coupling head will therefore be useful for connecting lengths of pipe quickly and efficiently. The configuration of the improved coupling head described herein will thus enable different types of connecting elements to be produced, such as linear connections, elbow joints, T-branches, connections with fixed elements, etc. It will therefore be a useful novelty in the pipe installations supplying and fitting industry in general. Its original and novel shape and structure entail many advantages with respect to other, traditional conceptions of functional elements with the same features. Of these advantages, mention should be made of its simplicity, which makes it easy to assemble, and extremely easy to use, as it enables sturdy unions or connections to be made between lengths of pipe in a manner that is easy, simple and reversible, that is with the possibility of their being taken apart in a similar fashion.

Up till now, the technical solutions that have been used to join or connect lengths of pipe have consisted basically of pieces or couplings specially designed to fit onto the end of these pipes using mechanical means or systems to secure them in place, usually adjustable clips of some kind.
There are also other solutions which involve welding or joining lengths of pipe with the aid of an adhesive. The disadvantage is that these connections cannot be taken apart, and it is necessary to break or destroy them, in addition to the fact that certain materials are unsuitable for welding. In the case of plastics, for example, adhesive welding can be used for PVC, but not for polyethylene. In these cases the use of pressure coupling heads, like the one described herein, is of great interest.

A third solution offered by the current State of Technology is that of elastic unions consisting of couplings made of elastic materials, the disadvantage being that the resistance of these unions or connections to stress is considerably limited and, after a time, the materials used can also deteriorate and age, losing their mechanical characteristics.

In addition to this, as mentioned earlier, the device described herein enables connections to be made which would otherwise be complicated to achieve with certain materials such as, for example, polyethylene tubes which cannot be welded by means of adhesives but rather by heat. All these solutions entail the further disadvantage that, since the installation and removal operations are complex, they require more time and manpower than the one described in the following paragraphs. Furthermore, some traditional couplings incorporate elements such as clips, washers and screws, which can easily fall out and be lost, whereas this invention consists of a coupling that comprises very few elements, all of which are joined to one another in some way.

Compared with other available solutions known in the current state of technology, the improved coupling head device for connecting pipes described herein constitutes a novel device used to construct elements for connecting pipes. These connecting pieces normally consist of a length of pipe or tube with coupling heads at each end, like the invention described herein, forming a catch mechanism which clamps the length of pipe to which it is connected, thereby eliminating complex mechanical fastening systems characterised by the previous systems of connecting by means of couplings and clips, and simplifying greatly the process of connecting coupling and lengths of pipe.

The improved coupling head device for connecting pipes described in the following paragraphs consists of a coupling head which fits onto a connecting element by means of an outer socket that is screwed onto one of the ends of the connecting piece used, whether a pipe fitting, elbow, T-joint, etc. Inside the aforementioned outer socket are a clip-holder socket, a clip socket and an O-ring seal. The O-ring seal forms a steamtight union between the clip-holder socket and the end of the connecting element. Inside the clip-holder socket is another socket, slightly smaller in diameter, the so-called clip socket, which has at one end a number of flexible tags ending in a series of inner teeth which function as a clamp, securing the pipe that is fitted inside in place. This head can be designed with different numbers of toothed tags depending on the elasticity desired. In addition, when the outer socket is screwed on, its tapered inner part pushes these flexible tags of the clip socket inwards, so that their inner teeth grip the pipe that is fitted inside the head, thus ensuring that sufficient pressure is exerted by the teeth of the clip socket to hold the pipe in place.

Furthermore, as the improved coupling head for connecting pipes is removable, this task is facilitated by the fact that one end of the clip socket that grips the pipe, as explained previously, fits into the clip-holder socket. This connection, far from being rigid, allows a degree of movement along the length of the socket, making it possible to slide the clip socket outwards for a short distance, completely freeing the teeth of some of the flexible tags when the pipe that has been held in place is pulled outwards.

In addition to the foregoing, in order to avoid the need to dismantle the different pieces that make up the improved coupling head for connecting pipes, the clip-holder socket is trapped by a set of grooves inside the ends of the connecting element. These hold both the O-ring seal and the clip socket when the outer socket is removed. This facilitates installation as it prevents the different pieces that make up the improved coupling head for connecting pipes from falling out accidentally. Nevertheless, they can be easily dismantled when required by turning the aforementioned clip-holder socket to a special position, freeing it from the grooves.

Moreover, as mentioned earlier, the improved coupling head for connecting pipes can be used to join pipe connecting pieces in different ways, depending on the desired use in each case. That means that connecting elements fitted with the improved coupling head for connecting pipes can be built under the aforementioned specifications, in the shape of a simple coupling for linear pipe connections, elbows or T-joints, etc.

In addition to this, the improved coupling head for connecting pipes described herein can be used to make connections between different lengths of tube and connecting elements in an efficient and sturdy fashion, yet if it is wished to disengage the union or connection, one has only to loosen the outer socket of each head, releasing the catches formed by the aforementioned toothed clip sockets that grip the ends of the pipe that are joined to the connecting element fitted with the improved coupling head for connecting pipes.

The following paragraphs contain a detailed description of the improved coupling head for connecting pipes that is recommended herein. This description refers to the accompanying diagram which depicts, merely as an example that is non-limiting, a preferred form of producing the invention, which may undergo any variations as regards detail, provided that they do not involve any major alterations to the essential characteristics of the aforesaid improvements.

The aforementioned diagram illustrates the following :

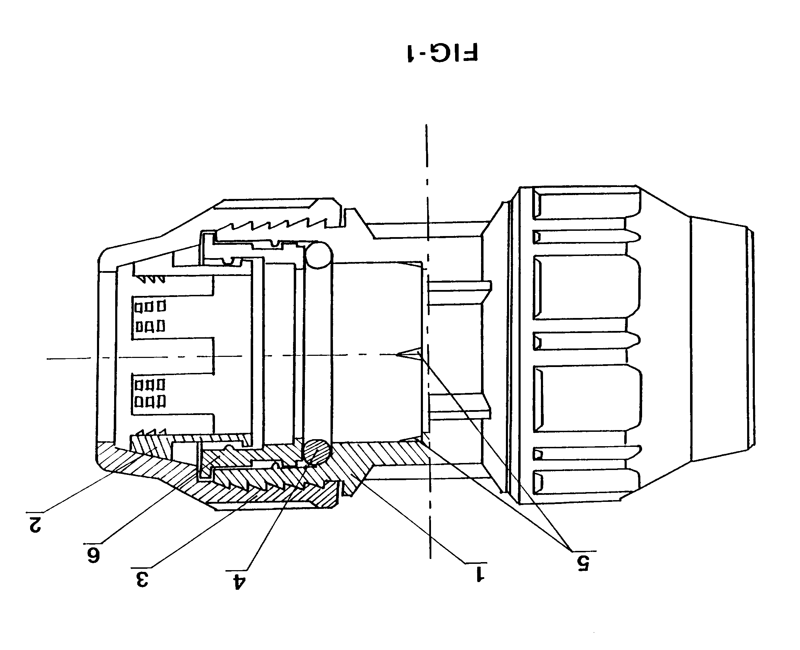

Figure 1: Semi-section of a coupling for making linear connections between lengths of pipe, using two improved coupling heads for connecting pipes at each end of the coupling.

As illustrated in the example, the improved coupling head for connecting pipes described herein is a novel and original device for connecting or joining lengths of cylindrical tube, and in this example the device to which it is fitted is a coupling designed for making linear connections between two lengths of pipe. This coupling for connecting two lengths of pipe in linear fashion is made up of a first piece or actual coupling, which can be called the main body (1), both ends of which are fitted with identical improved coupling heads for connecting pipes which are then fitted onto two pipe ends. The coupling (1), as can easily be seen from the drawing, consists of a straight, symmetrical connecting piece with screwed ends that receive the outer socket (3). They have an outer section with grooves enabling them to be tightened and loosened, either manually or with the help of a spanner. Each actual improved coupling head for connecting pipes comprises an outer socket (3) consisting, on the one hand, of a socket with a straight section that screws onto the end of the coupling (1), and another tapered section which is decreases in diameter towards the ends. Inside the outer socket (3) and between the end of the coupling (1) is an O-ring seal (4) housed in an inner ridge of the coupling (1). Pressure is exerted on this O-ring seal by a clip-holder socket (6) which in turn is pushed by the outer socket (3) towards the inside of the coupling when the outer socket (3) is screwed on. This original system ensures that the coupling (1) and clip-holder socket fit together in a totally steam tight manner. This clip-holder socket (6) has a clip-socket (2) inside consisting of an initial section of socket with a rim at one end, ensuring that it is trapped between two inner grooves of the clip-holder socket (6), followed by a number of flexible tags which end in a series of inner teeth that exert a clip-like pressure on the pipe that is placed inside, securing it in place. The ends of the flexible tags are fashioned in the shape of a wedge, which is pushed by the tapering section of the actual outer socket (3), causing the clip formed by the aforementioned flexible tags to close. These then grasp between their teeth the length of pipe that is fitted into the improved coupling head for connecting pipes (which is not shown in this figure). Furthermore, in order to prevent the clip-holder socket (6) and the clip socket (2) from falling out when the outer socket (3) is removed, the clip-holder socket (6) is also trapped as its end comes up against an inner groove of the coupling (1), which in turn keeps the O-ring seal (4) in place. The clip-holder socket (6) can be removed by turning it to a certain release position. In addition to this, in order to prevent the pipe that is caught between the teeth of the clip socket (2) from turning, the coupling (1) has a number of ridges or ribs (5) inside in its centre part, so that when the pipe is fitted inside it, the pressure from these ridges prevents it from turning or makes such movement difficult, ensuring that the union or connection achieved with this improved coupling head for pipes is sufficiently sturdy.

In this way, this improved coupling head for connecting pipes enables two lengths of pipe to be connected and taken apart easily and quickly, facilitating considerably the task of the installer, who does not need to take the device to pieces but simply loosens it and places the pipe inside. At the same time, the device remains a compact unit, thus preventing the different elements from coming apart and falling out. This amounts to a saving of 80% in installation work, with the related reduction in costs.

The shape, materials and dimensions may vary as, in general, may all accessory and secondary elements, provided that they do not alter, change or modify the essential nature of the improvements described herein.

## Claims

1. Improved coupling head device for connecting pipes, characterised by the fact of comprising a clip socket (2) in the shape of a cylindrical socket, ending in a number of tags that are flexible lengthways, which in turn have a wedge-shaped end. The aforesaid clip socket (2) is held between one end of the connecting element (1) that incorporates this head and an outer screw socket (3) with a tapered end section that decreases in diameter towards the end and is able to push the wedges of the flexible tags of the clip socket (2) inwards, by means of inner teeth that grasp the length of pipe placed inside this coupling.

2. Improved coupling head for connecting pipes, as described in the first claim, characterised by incorporating an O-ring seal (4) and a clip-holder socket (6). The socket is housed between the connecting element (1) and the clip-holder socket held by the clip socket (2), and the joint is sealed by the pressure exerted by the outer socket (3) against one end of the clip-holder socket (6), which is transmitted to the O-ring seal (4).

3. Improved coupling head for connecting pipes, as described in the foregoing claims, characterised by the fact that the clip socket (2) is held inside the clip-holder socket (6) by means of a piece that juts out of the end of the former and fits into a groove cut into the inner surface of the latter. This allows the former a certain amount of movement along the length of the latter, so as to enable the pipe caught between the teeth of the clip socket (2) to be released when the outer socket is loosened or removed (3).

4. Improved coupling head device for connecting pipes, as described in the aforementioned claims, characterised by the fact that inside the connecting element (1) are a number or ridges or ribs that cause friction, making it difficult to turn the tube that is fitted inside.

5. Improved coupling head device for connecting pipes, as described in the aforementioned claims, characterised by the interaction between the rim at the end of the clip-holder socket (6) and the inner notch at the end of the connecting element (1), which engage with each other in sections, defining positions of locking and removal of both pieces.

6. Improved coupling head device for connecting pipes, as described in the foregoing claims, characterised by the fact that the connecting element (1) which incorporates the head can adopt different shapes such as elbows and T-joints, among others.
